# EUROPÄISCHE PATENTSCHRIFT

(11) **EP 0 874 869 B1**
(45) Veröffentlichungstag und Bekanntmachung des Hinweises auf die Patenterteilung: **24.11.1999**
(21) Anmeldenummer: 97901027.9
(22) Anmeldetag: 15.01.1997
(51) Int. Cl.: C08F 283/00, C08G 18/63, C08G 18/08, C08G 18/10, C08G 18/28, C08G 18/83, C08G 18/62, C09D 175/04

(54) **WÄSSRIGE POLYMER/POLYURETHAN-HARZ-BINDEMITTELDISPERSION, DEREN HERSTELLUNG, ÜBERZUGSMITTEL UND VERWENDUNG**
AQUEOUS POLYMER/POLYURETHANE RESIN BINDER DISPERSION, ITS PREPARATION, COATING AGENT AND USE
DISPERSION AQUEUSE DE LIANT POLYMERE/RESINE DE POLYURETHANE, SA PREPARATION, AGENT DE REVETEMENT ET UTILISATION

(30) Priorität: 20.01.1996 DE 19602040
(43) Veröffentlichungstag der Anmeldung: 04.11.1998
(73) Patentinhaber: Herberts Gesellschaft mit beschränkter Haftung, 42285 Wuppertal (DE)
(72) Erfinder: GÖBEL, Armin, D-58300 Wetter (DE); VOGT-BIRNBRICH, Bettina, D-42719 Solingen (DE); DÖBERT, Jürgen, D-45549 Sprockhövel (DE); BRUNNER, Marcus, D-42283 Wuppertal (DE)
(74) Vertreter: Türk, Gille, Hrabal
(86) Internationale Anmeldenummer: EP9700150
(87) Internationale Veröffentlichungsnummer: WO9726289

(56) Entgegenhaltungen:
- EP-A- 0 297 576
- EP-A- 0 315 006
- EP-A- 0 353 797
- EP-A- 0 678 536
- WO-A-89/10380

## Beschreibung

Die Erfindung betrifft wäßrige Bindemitteldispersionen auf der Basis von Hybridpolymeren, die hergestellt werden durch Reaktion von Polyurethan(harnstoff)harzen und gegebenenfalls zusätzlich Polyestern sowie in Gegenwart der Polyurethan(harnstoff)harze und/oder Polyester hergestellten (Meth)acrylcopolymeren. Sie betrifft auch das Verfahren zur Herstellung der Hybridpolymeren, sowie daraus herstellbare wäßrige Überzugsmittel und Verfahren zur Mehrschichtlackierung unter Verwendung dieser Überzugsmittel.

In der Automobilindustrie werden Metall- und Kunststoffteile mit mehrschichtigen Überzügen versehen. Sie dienen zum Korrosionsschutz der Substrate, sollen aber auch eine gute dekorative Wirkung aufweisen. Es handelt sich dabei im allgemeinen um Mehrschichtüberzüge auf Basis einer Grundierung und einer oder mehrerer Folgeschichten, z.B. Basislackschichten, Decklackschichten, die dann mit einem transparenten Klarlack als Folgebeschichtung versehen werden können.

Wasserverdünnbare Basislacke auf Basis von Polyurethan/Poly(meth)acrylat-Polymerhybriden sind bekannt.

Die EP-A-0 297 576 beschreibt die Polymerisation von (Meth)acrylmonomeren in Gegenwart zuvor hergestellter Polyurethandispersionen. Nach Abschluß der Polymerisation können aus den erhaltenen Dispersionen wäßrige Basislacke hergestellt werden.

Die EP-A-0 353 797 beschreibt die Herstellung eines hydroxyfunktionellen Polyurethanharzes in einem ungesättigten Monomeren als Lösemittel, wobei das ungesättigte Monomere gegenüber Isocyanat reaktiv sein kann. Nach Überführung der Polyurethanlösung in die wäßrige Phase wird eine Emulsionspolymerisation durchgeführt. Die erhaltene Hybridpolymer-Dispersion kann als Wasserbasislackbindemittel verwendet werden.

In der EP-A-0 401 565 werden Wasserbasislacke beschrieben, deren Bindemittel hergestellt werden durch Emulsionspolymerisation von unter Zusatz externer Emulgatoren hergestellten wäßrigen Emulsionen von in ungesättigten Monomeren gelösten ungesättigt funktionalisierten Polyurethanmakromonomeren.

In den EP-A-0 424 705, EP-A-0 521 928, EP-A-0 522 419, EP-A-0 522 420, EP-A-0 662 992 und WO 95/14721 werden Wasserbasislacke beschrieben, die auf Polyurethan/Poly(meth)acrylat-Polymerhybriden basieren, wobei die Polymerhybride synthetisiert worden sind durch Pfropf- bzw. Blockpolymerisation ungesättigter Monomerer mit ungesättigt funktionalisierten Polyurethanmakromonomeren. Dabei können die ungesättigten Gruppen der Polyurethanmakromonomeren lateral oder terminal angeordnet sein. Das ungesättigte Polyurethanmakromonomere kann in organischem Lösemittel gelöst, beispielsweise im ungesättigten Monomeren selbst oder in Abwesenheit von Lösemitteln hergestellt worden sein. Die Copolymerisation kann in wäßriger oder nichtwäßriger Phase, also vor oder nach Überführung in die wäßrige Dispersion erfolgen.

Aus der DE-A-44 13 737 sind wäßrige, insbesondere emulgatorfreie Emulsionen von vernetzungsfähigen, Hydroxylgruppen enthaltenden Polymerisat-Polyurethan-Harzen bekannt. Diese wäßrigen Dispersionen sind erhältlich durch gemeinsame Kettenverlängerung von harnstoffgruppenfreien Polyurethanen mit im wesentlichen endständigen OH-Gruppen, zusammen mit hydroxylgruppenhaltigen Polymeren auf der Basis ethylenisch ungesättigter Monomerer, mit Diisocyanaten in einem wasserfreien Medium, Neutralisation von vorhandenen in anionische Gruppen überführbaren Carboxylgruppen sowie Überführung des entstehenden Produktes in die Wasserphase. Die so erhaltenen wäßrigen Bindemitteldispersionen sind als Bindemittel für wäßrige Basislacke, wie sie bei der Herstellung von dekorativen Mehrschichtlackierungen im Bereich der Kraftfahrzeuglackierung eingesetzt werden, gut geeignet.

Die bekannten Wasserbasislacke sind verbesserungsbedürftig hinsichtlich der Steinschlagfestigkeit der mit ihnen hergestellten Mehrschichtlackierungen. Werden diese Wasserbasislacke bei Reparaturlackierungen im Rahmen der Serienlackierung, beispielsweise zur sogenannten Endmontagenreparatur eingesetzt, so ist die Haftung der mit ihnen erzeugten Basislackschichten auf der äußeren Klarlackschicht, insbesondere auf einer ungeschliffenen Klarlackschicht, einer Mehrschichtlackierung unzureichend.

Aufgabe der Erfindung ist die Bereitstellung eines wäßrigen Bindemittels, das insbesondere zur Herstellung von Wasserbasislacken mit dem Eigenschaftsniveau der bekannten Wasserbasislacke geeignet ist. Die aus den Bindemitteln herstellbaren Überzugsmittel, insbesondere Wasserbasislacke, sollen darüber hinaus die Herstellung von Lackierungen, insbesondere von Mehrschichtlackierungen, mit verbesserter Steinschlagfestigkeit erlauben und sie sollen bei der Kraftfahrzeuglackierung nicht nur zur Erstlackierung, sondern auch zur Reparaturlackierung, insbesondere bei der vorstehend erwähnten Endmontagenreparatur eingesetzt werden können; dabei sollen aus ihnen erstellte Basislackschichten eine ausreichende Haftung auf der äußeren, insbesondere ungeschliffenen Klarlackschicht einer Mehrschichtlackierung besitzen.

Die Aufgabe wird gelöst durch wäßrige Bindemitteldispersionen, die erhältlich sind durch gemeinsame Umsetzung von
I. 20 bis 97 Gew.-% eines oder mehrerer Polyurethanharze und/oder Polyurethanharnstoffharze mit mindestens einer gegenüber einem Kettenverlängerungsmittel IV) reaktiven Gruppe, mit einem Zahlenmittel der Molmasse (Mn) von 1000 bis 10000, und 8 bis 80 mEqu pro 100 g Festharz ionischen, in ionische Gruppen überführbaren und/oder hydrophilen Gruppen,
II. 0 bis 30 Gew.-% eines oder mehrerer Polyesterharze mit einem Zahlenmittel der Molmasse (Mn) von 500 bis 5000 sowie zwei oder mehreren gegenüber dem Kettenverlängerungsmittel IV) gleichen reaktiven Gruppen wie in I), und
III. 3 bis 80 Gew.-% eines oder mehrerer (Meth)acrylcopolymerer mit 0 bis 40 mEqu pro 100 g Festharz ionischen Gruppen mit gleicher Ladung wie in Komponente I) oder in solche ionische Gruppen überführbaren Gruppen und/oder hydrophilen Gruppen, mit mindestens zwei gegenüber dem Kettenverlängerungsmittel IV) gleichen reaktiven Gruppen wie in I) und II)
   wobei die Summe der Gew.-% der Komponenten I) bis III) 100 Gew.-% ergibt
   und wobei mindestens 50 Gew.-% der Komponente III) bezogen auf die Gesamtmenge der Komponente III) in Gegenwart von einer oder mehreren der Komponenten I) und/oder II), entsprechend mindestens 20 Gew.-% der Gesamtmenge der Summe der Komponenten I) und II) hergestellt worden sind, mit
IV. einem oder mehreren Kettenverlängerungsmitteln IV), das zwei oder mehr reaktive Gruppen aufweist, die mit den reaktiven Gruppen aus den Komponenten I), II) und III) reaktiv sind,

Neutralisation mindestens eines Teils von gegebenenfalls vorhandenen in ionische Gruppe überführbaren Gruppen, sowie Überführung in die Wasserphase.

Die Erfindung betrifft auch das Verfahren zur Herstellung der wäßrigen Bindemitteldispersionen, das durch die vorstehend zur Definition der Bindemitteldispersionen aufgezeigten Parameter gekennzeichnet ist.

Bevorzugt wird erfindungsgemäß das Kettenverlängerungsmittel IV in einem molaren Verhältnis (bzw. Zahlenverhältnis) der gegenüber dem Kettenverlängerungsmittel IV reaktiven Gruppen aus den Komponenten I, II und III zu den reaktiven Gruppen von IV von 1 : 1 bis 10 : 1, besonders bevorzugt von 1,05 : 1 bis 10 : 1.

Die erfindungsgemäßen wäßrigen Bindemitteldispersionen enthalten Hybridpolymere, die hergestellt werden durch gemeinsame Kettenverlängerung von durch radikalische Polymerisation in Gegenwart ionische und/oder hydrophile Gruppen sowie weitere funktionelle Gruppen tragender Polyurethan(harnstoff)harze und gegebenenfalls zusätzlich im wesentlichen von ionischen und/oder hydrophilen Gruppen freien, jedoch gleichartig funktionalisierter Polyester hergestellter gegebenenfalls gleichsinnig geladene ionische und/oder hydrophile Gruppen tragender (Meth)acrylcopolymerer mit gleicher chemischer Funktionalität wie die Polyurethan(harnstoff)harze und die gegebenenfalls verwendeten Polyesterharze. Es handelt sich um Umsetzungsprodukte von gegenüber den reaktiven Gruppen der Komponenten IV) reaktive Gruppen enthaltenden Polyurethan(harnstoff)harzen I) und gegebenenfalls Polyesterharzen II) mit in Gegenwart von I) und/oder II) durch radikalische Polymerisation hergestellten, die gleichen reaktiven Gruppen tragenden (Meth)acrylcopolymeren III) und einer oder mehreren Komponenten IV), wobei die reaktiven Gruppen der Komponente IV) vollständig verbraucht werden. Die polymeren Umsetzungsprodukte können linear aufgebaut sein. Im allgemeinen sind sie verzweigt aufgebaut oder liegen in Form von Mikrogelen vor. Ohne an eine Theorie gebunden zu sein, handelt es sich um kovalent verbundene Polymerhybride im Sinne interpenetrierender Netzwerke. Die erfindungsgemäßen Dispersionen besitzen zwischen 15 und 80 mEqu, bevorzugt zwischen 30 und 60 mEqu pro 100 g Harzfestkörper ionische und/oder hydrophile Gruppen, beispielsweise bevorzugt entsprechend einer Säurezahl von 10 bis 40 mg KOH/g, bezogen auf den Harzfestkörpergehalt der Dispersionen. Die erfindungsgemäßen Bindemittel können zur Vernetzung fähige Gruppen tragen. Bei den zur Vernetzung fähigen Gruppen kann es sich um die gleichen wie die gegenüber den reaktiven Gruppen der Komponente IV) reaktiven Gruppen oder um davon unterschiedliche Gruppen handeln. Sind zur Vernetzung fähige Gruppen enthalten, so handelt es sich bevorzugt um eine Menge von 30 bis 300 mEqu pro 100 g Harzfestkörper. Bevorzugte zur Vernetzung fähige Gruppen sind Hydroxylgruppen, bevorzugt entsprechend einer Hydroxylzahl zwischen 20 und 150 mg KOH/g Festharz.

Beispiele für die reaktiven Gruppen der Komponenten I, II und III sind Hydroxylgruppen, Aminogruppen (z.B. primäre oder sekundäre Aminogruppen), Hydrazingruppen, Alkoxysilangruppen, Aldehydgruppen, 1,3-Dicarbonylfunktionen, sowie CH-acide Gruppen (die beispielsweise durch 1,3-Dicarbonylfunktionen bedingt werden können, wie sie aus Acetoacetyl- oder Malonestergruppen bekannt sind) oder Isocyanatgruppen.

Beispiele für zu den vorstehenden Gruppen komplementär funktionelle bzw. komplementär reaktive Gruppen des Kettenverlängerungsmittels IV sind die gleichen Gruppen. Beispielsweise können die Komponenten I), II) und III) Hydroxylgruppen tragen und das Kettenverlängerungsmittel IV) besitzt Isocyanatgruppen oder umgekehrt. Weitere Beispiele für komplementäre Funktionalitäten zwischen den gleichartig funktionalisierten Komponenten I), II) und III) und dem Kettenverlängerungsmittel IV) sind Isocyanatgruppen in I), II) und III)/NH- und/oder NH₂-Gruppen in IV), Alkoxysilangruppen (ROSi-Gruppen mit R=C1-C8-Alkyl) in I), II) und III)/Hydroxylgruppen in IV), 1,3-Dicarbonyl-Funktionen, wie beispielsweise Acetoacetyl- oder Malonester-Gruppen in I), II) und III)/Isocyanatgrupppen in IV), 1,3-Dicarbonyl-Funktionen in I, II) und III)/Aldehydgruppe(n) in IV), 1,3-Dicarbonyl-Funktionen in I), II) und III)/NH₂ und/oder NH-NH₂ in IV), etc. Die Komponenten I) und/oder II) sollen keine olefinisch ungesättigten Doppelbindungen enthalten. Beispiele für Kettenverlängerungsmittel IV) mit Aldehydgruppe(n) sind Polyaldehyde wie z.B. Glyoxal, Glutaraldehyd, bevorzugt jedoch ist Formaldehyd; Kettenverlängerungsmittel IV) mit Hydroxylgruppen sind Polyole, aber vorteilhaft auch Wasser. Dazu ist zu bemerken, daß Wasser dadurch als Kettenverlängerungsmittel IV) wirkt, daß es zunächst die reaktiven Gruppen der Komponenten I), II) und III) hydrolysiert. Beispielsweise können Alkoxysilangruppen in I), II) und III) oder Isocyanatgruppen in I), II) und III) vorliegen und mit Wasser hydrolysiert werden, worauf dann die Kettenverlängerung durch Kondensationsreaktionen und/oder Additionsreaktionen einsetzt. So lassen sich z.B. Alkoxysilangruppen zu Silanolgruppen (HOSi-Gruppen) hydrolysieren, die anschließend durch Kondensation unter Siloxanbrückenbildung (-Si-O-Si-) eine Kettenverlängerung bewirken, während z.B. Isocyanatgruppen mit Wasser unter Kohlendioxidabgabe zu NH₂-Gruppen hydrolysiert werden können und mit weiteren Isocyanatgruppen durch Addition unter Bildung von Harnstoffgruppen zur Kettenverlängerung führen. Bevorzugte Kombinationen sind OH-Gruppen in I), II) und III)/Isocyanatgruppen in IV) oder umgekehrt oder Alkoxysilangruppen in I), II) und III) und Wasser in stöchiometrisch benötigter Menge als Komponente IV).

Im Falle von Alkoxysilangruppen in I), II) und III) und Wasser als Komponente IV) kann die gesamte Wassermenge, die zur Herstellung der Dispersion erforderlich ist, verwendet werden. Bevorzugt erfolgt jedoch zunächst die Hydrolyse mit einer geringeren Wassermenge, bevorzugt bis zum zehnfachen stöchiometrischen Überschuß, besonders bevorzugt mit der ein- bis fünffachen stöchiometrischen Wassermenge, berechnet auf die zur Hydrolyse der ROSi-Gruppen notwendigen Menge. Die Kettenverlängerung der ROSi-funktionalisierten Komponenten I), II) und III) erfolgt nach Zugabe eines bevorzugt bis zu zehnfachen stöchiometrischen Überschusses der zur Hydrolyse der ROSi-Gruppen notwendigen Wassermenge. Die Hydrolyse der ROSi-Gruppen läuft schnell ab. Die durch Hydrolyse gebildeten HOSi-Gruppen kondensieren unter Wasserabspaltung zu Siloxanbrücken und führen damit zum kettenverlängerten erfindungsgemäßen Bindemittel. Die Ausbildung der Siloxanbrücken erfolgt in der dispergierten oder nicht-dispergierten Harzphase, d.h. vor oder nach dem Überführen in die wäßrige Dispersion.

Die gegenüber den reaktiven Gruppen der Komponente IV) komplementären reaktiven Gruppen von I), II) und III) können durch gezielte Synthese direkt in die Komponenten I), II) und III) eingeführt werden, beispielsweise durch Verwendung entsprechender monomerer Verbindungen bei deren Synthese. Sie können aber beispielsweise auch durch polymeranaloge Umsetzung geeignet funktionalisierter Komponenten I), II) und/oder III) mit geeigneten monomeren Verbindungen eingeführt werden. Beispielsweise können die Komponenten I), II) und/oder III) hydroxyfunktionell sein und durch polymeranaloge Umsetzung mit Acetessigsäurederivaten, z.B. Alkylestern acetoacetyliert werden, um eine 1,3-Dicarbonylgruppe zu erhalten oder die Komponenten I), II) und/oder III) können beispielsweise isocyanatfunktionell sein und durch polymeranaloge Umsetzung mit Aminopropyltriethoxysilan in Alkoxysilangruppen enthaltende Komponenten I), II) und/oder III) umgewandelt werden.

Die Komponenten I) und gegebenenfalls auch III) enthalten ionische, in ionische Gruppen überführbare Gruppen und/oder hydrophile Gruppen, bevorzugt sind nur ionische bzw. in solche überführbare Gruppen enthalten.

Bei den ionischen Gruppen kann es sich um kationische oder bevorzugt anionische Gruppen, bei den in ionische Gruppen überführbaren Gruppen der Komponenten I) und gegebenenfalls auch III) kann es sich um in anionische oder um in kationische Gruppen überführbare Gruppen handeln, in anionische Gruppen überführbare Gruppen sind bevorzugt. In ionische Gruppen überführbare Gruppen sind beispielsweise Säuregruppen oder Basengruppen. Die Überführung in ionische Gruppen geschieht bevorzugt durch Neutralisation. Beispiele für durch Neutralisation mit Säuren, bevorzugt organischen Säuren wie beispielsweise Ameisensäure oder Essigsäure in kationische Gruppen überführbare Gruppen sind primäre, sekundäre oder tertiäre Amingruppen. Beispiele für die bevorzugten durch Neutralisation mit Basen, beispielsweise bevorzugt Aminen oder Aminoalkoholen in anionische Gruppen überführbare Gruppen sind Sulfonsäuregruppen, Phosphor- oder Phosphonsäuregruppen und besonders bevorzugt Carboxylgruppen.

Bei den hydrophilen Gruppen handelt es sich beispielsweise um Polyalkylenoxidgruppen, bevorzugt Polyethylenoxidgruppen. Dabei bezieht sich die Mengenangabe "mEqu pro 100 g" auf die niedrigstmolekularen Bestandteile solcher Gruppen, also beispielsweise auf Alkylenoxideinheiten in Polyalkylenoxidgruppen, z.B. auf Ethylenoxideinheiten in Polyethylenoxidgruppen (derartige Einheiten heißen auch Repetitionseinheiten).

Die in Mengen zwischen 20 und 97 Gew.-%, bevorzugt zwischen 70 und 95 Gew.-%, bezogen auf die Summe aus den Komponenten I), II) und III), eingesetzten Polyurethan(harnstoff)e der Komponente I) besitzen ein Zahlenmittel der Molmasse (Mn) von 1000 bis 10000, und sie enthalten 8 bis 80 mEqu pro 100 g Festkörper ionische, in ionische Gruppen überführbare und/oder hydrophile Gruppen. Bevorzugt sollen sie in ionische Gruppen überführbare Substituenten oder ionische Gruppen tragen, insbesondere in anionische Gruppen überführbare Gruppen, wie Säuregruppen, z.B. Sulfonsäure-, Phosphonsäure- oder Carbonsäuregruppen. Bevorzugt sind sterisch gehinderte Carbonsäuregruppen. Die Säurezahl soll zwischen 5 und 50 liegen, insbesondere unter 30; sie gewährleistet nach Neutralisation mindestens eines Teils dieser Gruppen eine stabile Dispergierung in der Wasserphase. Dabei ist es möglich, daß anteilsweise auch andere polare, hydrophile Gruppen im Molekül verhanden sind, wie z.B. Polyalkylenoxidgruppen, bevorzugt Polyethylenoxidgruppen. Diese verstärken die Stabilisierung der erfindungsgemäßen wäßrigen Dispersion. Bevorzugt sind die Polyurethan(harnstoff)e linear aufgebaut. Die gegenüber den reaktiven Gruppen der Komponente IV) reaktiven Gruppen des oder der Polyurethan(harnstoff)e der Komponente I) können lateral angeordnet sein, bevorzugt sind sie terminal angeordnet. Bevorzugt weisen die Polyurethan(harnstoff)e I) Hydroxylgruppen als gegenüber Komponente IV) reaktive Gruppen auf und ihre Hydroxylzahl beträgt zwischen 5 und 150, insbesondere über 10 und unter 120 mg KOH/g. Die Polyurethan(harnstoff)e der Komponente I) enthalten bevorzugt keine olefinisch ungesättigten Doppelbindungen, es kann keine Copolymerisation mit den olefinisch ungesättigten Monomeren für die Synthese des (Meth)acrylcopolymeren III) erfolgen.

Als Komponente I) können Polyurethanharze und/oder Polyurethanharnstoffharze, im folgenden als Polyurethan(harnstoff)e bezeichnet, eingesetzt werden, wie sie z.B. als funktionalisierte Polyurethanbindemittel bekannt sind. Es handelt sich dabei um Polyurethanharze, die über ionische Gruppen in die Wasserphase überführt werden können. Sie enthalten zusätzlich mindestens zwei gegenüber der Komponente IV) reaktive Gruppen. Besonders bevorzugt sind OH-Gruppen. Es handelt sich im allgemeinen um Polyurethane, herstellbar auf Basis von Polyesterpolyolen, Polycarbonatpolyolen und/oder Polyetherpolyolen, insbesondere Polymerdiolen, die gegebenenfalls unter Verwendung niedermolekularer gegebenenfalls polyfunktioneller Hydroxyl- und/oder Aminverbindungen, mit Di- bzw. Polyisocyanaten sowie mit gegenüber Isocyanaten funktionellen, bevorzugt difunktionellen Verbindungen, die ionische Gruppen, in ionische Gruppen überführbare und/oder hydrophile Gruppen aufweisen, umgesetzt werden. Als Verbindungen mit mehr als einer, bevorzugt mit zwei, mit Isocyanatgruppen reaktiven Gruppen und mindestens einer ionischen, zur Ionenbildung befähigten und/oder hydrophilen Gruppe dienen bevorzugt niedermolekulare Verbindungen. Bevorzugt sind anionische oder anionenbildende Gruppen. Geeignete mit Isocyanatgruppen reagierende Gruppen sind insbesondere Hydroxylgruppen und primäre und sekundäre Aminogruppen. Als saure zur Anionenbildung befähigte Gruppen kommen z.B. Carboxyl-, Phosphorsäure- und Sulfonsäuregruppen in Betracht. Als basische in Kationen überführbare Grupppen kommen beispielsweise primäre, sekundäre und tertiäre Aminogruppen oder Oniumgruppen, wie quartäre Ammonium-, Phosphonium- und/oder tertiäre Sulfoniumgruppen in Betracht. Die erfindungsgemäß bevorzugt einzuführenden anionischen Gruppen sind Carboxylgruppen; sie können beispielsweise durch Verwendung von Hydroxyalkancarbonsäuren, insbesondere Dihydroxyalkansäuren, eingeführt werden. Bevorzugte Dihydroxyalkansäuren sind α,α-Dimethylolalkansäuren. Die bevorzugtesten Verbindungen sind α,α-Dimethylolpropionsäure und α,α-Dimethylolbuttersäure. Es können auch saure Polyester wie sie beispielsweise in der DE-A-39 03 804 beschrieben sind, eingesetzt werden. Diese Polyester besitzen vorzugsweise ein Molekulargewicht von 300 bis 2000, eine Hydroxylzahl von 56 bis 374 und eine Säurezahl von 28 bis 187. Beispiele für nicht-ionische hydrophile Polyole sind Verbindungen, die Polyetherketten auf Basis von Ethylenoxid- und/oder Propylenoxideinheiten aufweisen. Die anionischen, kationischen oder nicht-ionischen Gruppen dienen zur Stabilisierung der wäßrigen Dispersion. Es können ionische und nicht-ionische Gruppen gemeinsam eingesetzt werden. Bevorzugt ist eine Stabilisierung durch ionische Gruppen, insbesondere bevorzugt anionische Gruppen.

Es ist zweckmäßig für die Synthese der Polyurethan(harnstoff)e I) solche Komponenten zu wählen, von denen bekannt ist, daß sie möglichst witterungsstabil sind und keine Neigung zum Vergilben zeigen.

Die Herstellung der Komponente I) kann auf unterschiedliche Art und Weise erfolgen. So ist es beispielsweise möglich mit einem Unterschuß an Isocyanatgruppen zu arbeiten, wobei direkt Polyurethanpolyole erhalten werden. Diese können gegebenenfalls über Polyisocyanat kettenverlängert werden. Es ist aber auch möglich, mit einem Isocyanatüberschuß zu arbeiten. Dabei erhält man mit Isocyanatgruppen terminierte Polyurethanprepolymere. Diese können durch Umsetzung mit Diolen oder anderen isocyanatreaktiven Verbindungen kettenverlängert werden.

Die Synthese der Polyurethanpolymeren der Komponente I) erfolgt im allgemeinen in wasserfreier Form. Es ist möglich zur Herabsetzung der Viskosität organische, nicht mit Isocyanatgruppen reaktive Lösemittel zuzusetzen. Bevorzugt werden dabei solche Lösemittel ausgewählt, die nach einer Überführung in die Wasserphase nicht zu störenden Effekten im Überzugsmittel führen. Besonders geeignet sind mit Wasser mischbare Lösungsmittel. Gegebenenfalls ist es möglich, den Lösemittelanteil durch Destillation zu reduzieren oder vollständig zu entfernen.

Bei den als optionale, bevorzugt jedoch in Mengen zwischen 2 und 20 Gew.-%, bezogen auf die Summe aus den Komponenten I), II) und III), eingesetzten Polyesterharzen der Komponente II) handelt es sich um solche mit einem Zahlenmittel der Molmasse (Mn) von 500 bis 5000. Sie weisen im Mittel zwei oder mehrere gegenüber dem Kettenverlängerungsmittel IV) reaktive Gruppen auf, die mit denen der Komponenten I) und III) übereinstimmen. Bevorzugt handelt es sich um Polyesterpolyole mit einer Hydroxylzahl zwischen 50 und 300 mg KOH/g. Die Polyesterharze der Komponente II) sind bevorzugt verzweigt aufgebaut und im wesentlichen frei von ionischen, in ionische Gruppen überführbaren und/oder hydrophilen Gruppen. Beispielsweise weisen sie dementsprechend niedrige Säurezahlen von 0 bis 5 mg KOH/g auf. Sie werden zweckmäßig aus solchen Polyol- und Polycarbonsäure(anhydrid)-komponenten aufgebaut, von denen bekannt ist, daß sie möglichst witterungsstabil sind und keine Neigung zum Vergilben zeigen. Die Polyesterharze der Komponente II) enthalten keine olefinisch ungesättigten Doppelbindungen, es kann keine Copolymerisation mit den olefinisch ungesättigten Monomeren für die Synthese des (Meth)acrylcopolymeren III) erfolgen. Bevorzugt werden die Polyester unter Einbau natürlicher oder synthetischer, gesättigter C6-C40-Fettsäuren und/oder Fettalkoholen, wobei auch Dimerfettsäuren und/oder -alkohole eingeschlossen sind, synthetisiert.

Das Molekulargewicht des oder der in Mengen von 3 bis 80 Gew.-%, bevorzugt von 5 bis 40 Gew.-%, bezogen auf die Summe aus den Komponenten I), II) und III), eingesetzten (Meth)acrylcopolymeren der Komponente III) unterliegt keiner Beschränkung und kann in weiten Bereichen variiert werden. Beispielsweise liegt das Zahlenmittel der Molmasse (Mn) zwischen 1000 und 50000, z.B. 2000 bis 20000. Sie enthalten 0 bis 40 Milliequivalente pro 100g Festkörper in ionische Gruppen mit gleicher Ladung wie in Komponente I) überführbare und/oder hydrophile Gruppen sowie 50 bis 750 Milliequivalente pro 100 g Festkörper gegenüber dem Ketten-verlängerungsmittel IV) reaktive Gruppen, bevorzugt Hydroxylgruppen.

Es ist erfindungswesentlich, daß mindestens 50 Gew.-%, bevorzugt über 70 Gew.-% der Gesamtmenge des (Meth)acrylcopolymeren III) und besonders bevorzugt das gesamte (Meth)acrylcopolymere III) in Gegenwart von mindestens 20 Gew.-%, bevorzugt über 30 Gew.-%, besonders bevorzugt über 40 Gew.-% der Gesamtmenge der Komponente I) und II) hergestellt werden; die Komponente II) ist bevorzugt vorhanden.

Werden mehrere Komponenten I) und/oder II) verwendet, so können diese bei der Herstellung des (Meth)acrylcopolymeren III) als Gemisch vorliegen, oder es wird nur eine oder ein Teil der Komponenten I) und/oder II) eingesetzt und die restlichen werden zu einem späteren Zeitpunkt zugesetzt. Die Herstellung der (Meth)acrylcopolymeren III) kann durch radikalische Polymerisation nach üblichen Verfahren erfolgen. Dabei werden die Reaktionsbedingungen so gewählt, daß Pfropfreaktionen als Folge von H-Abstraktionen an Komponente I) und/oder II) im wesentlichen unterbleiben. Hierzu können beispielsweise mindestens 20 Gew.-%, bevorzugt über 30 Gew.-%, besonders bevorzugt über 40 Gew.-% der Komponenten I) und II) gegebenenfalls im Gemisch mit einem oder mehreren organischen Lösemitteln in das Reaktionsgefäß vorgelegt, auf Reaktionstemperatur geheizt und mindestens 50 Gew.-%, bevorzugt über 70 Gew.-%, besonders bevorzugt die Gesamtmenge des gegebenenfalls Radikalinitiatoren enthaltenden Monomerengemischs für die Synthese des (Meth)acrylcopolymeren III) zudosiert werden. Die gegebenenfalls verbleibende Restmenge des gegebenenfalls Radikal initiatoren enthaltenden Monomerengemischs für die Synthese des (Meth)acrylcopolymeren III) kann in gleicher Weise radikalisch polymerisiert werden, wobei gegebenenfalls organisches Lösemittel ohne Anteile der Komponenten I) und II) in das Reaktionsgefäß vorgelegt wird, auf Reaktions-temperatur geheizt wird und danach so verfahren wird wie vorstehend beschrieben. Das durch Polymerisation der gegebenenfalls verbleibenden Restmenge des Monomerengemischs erhaltene (Meth)acrylcopolymere III) kann dem in Gegenwart der Komponenten I) und II) synthetisierten (Meth)acrylcopolymeren III) dann nachträglich zugemischt werden.

Der in der vorliegenden Beschreibung gebrauchte Ausdruck "(Meth)acryl" steht synonym für "Acryl und/oder Methacryl".

Die Polymerisation wird beispielsweise bei Temperaturen zwischen 80°C und 180°C, vorzugsweise bei 100°C bis 150°C durchgeführt.

Die Polymerisationsreaktion kann mit bekannten Radikalinitiatoren, beispielsweise Peroxidverbindungen, Azoinitiatoren oder C-C-spaltenden Radikalinitiatoren gestartet werden.

Die Polymerisationsinitiatoren werden im allgemeinen beispielsweise in einer Menge von 0,1 bis 4 Gew.-%, bezogen auf die Monomeren-Einwaage für die Synthese des (Meth)acrylcopolymeren III), zugesetzt. Bei der Polymerisation können die Monomeren auch getrennt bzw. zeitlich versetzt zudosiert werden. Die Monomeren oder das eingesetzte Monomerengemisch können die Radikalinitiatoren enthalten oder die Radikalinitiatoren können zur Monomerenmischung gegebenenfalls geringfügig zeitversetzt zugesetzt oder separat zudosiert werden.

Die Herstellung des (Meth)acrylcopolymeren III) erfolgt, wie vorstehend beschrieben, in Anwesenheit von zumindest Teilmengen der Komponenten I) und/oder II), welche gegebenenfalls in einem organischen Lösemittel gelöst vorgelegt werden. Als Lösemittel eignen sich beispielsweise lackübliche wasserverdünnbare Lösemittel, wie beispielsweise: Glykolether, wie Butylglykol, Butyldiglykol, Dipropylenglykoldimethylether, Dipropylenglykolmonomethylether, Ethylenglykoldimethylether, Alkohole, wie Ethanol, Propanol, Isopropanol.

Die (Meth)acrylcopolymeren III) werden durch radikalische Polymerisation aus gegenüber den reaktiven Gruppen der Komponente IV) reaktive Gruppen aufweisenden ungesättigten Monomeren sowie weiteren ungesättigten Monomeren, die gegebenenfalls auch weitere reaktive Gruppen aufweisen können, aufgebaut. Bevorzugt handelt es sich bei den (Meth)acrylcopolymeren III) um Polyhydroxy(meth)acrylatharze. Als ethylenisch ungesättigte Monomere kommen praktisch alle radikalisch polymerisierbaren Monomeren in Frage.

Beispiele für ungesättigte Monomere sind Acrylsäurealkylester, Methacrylsäurealkylester, Maleinsäure- und/oder Fumarsäuredialkylester wobei der Alkylrest jeweils ein C₁- bis C₁₅-Alkylrest, linear oder verzweigt oder cycloaliphatisch ist. Beispiele für weitere copolymerisierbare Monomere sind Styrol oder substituierte Styrole, Vinyltoluol, (Meth)acrylamid und/oder (Meth)acrylnitril.

Beispiele für Monomere zur Erzielung der bevorzugten OH-Funktionalität sind (Meth)acrylsäurehydroxyalkylester. Diese enthalten bevorzugt zumindest teilweise sekundäre Hydroxylgruppen. Beispiele hierfür sind (Meth)acrylsäureester von 1,2-Alkandiolen mit 1 bis 12 Kohlenstoffatomen, beispielsweise Hydroxyethyl(meth)acrylat, Hydroxypropyl(meth)acrylat, Hydroxybutyl(meth)acrylat sowie Hydroxyalkyl(meth)acrylamide. Weitere Beispiele für hydroxyfunktionelle Verbindungen, die copolymerisiert werden können, sind Allylalkohol oder Monovinylether von Polyolen.

Die (Meth)acrylcopolymeren III) sollen im wesentlichen linear aufgebaut sein. Geringe Anteile, beispielsweise bis zu 1 Gew.-%, bezogen auf die gesamte Komponente III), von polyungesättigten Monomeren sind bei der Herstellung möglich.

Die gegenüber der Komponente IV) reaktive Funktionalität beträgt bevorzugt über 5. Es handelt sich bevorzugt um Polyhydroxyverbindungen mit einer OH-Zahl von 50 bis 400, bevorzugt von 100 bis 350 mg KOH/g. Die (Meth)acrylcopolymeren III) können zwischen 0 und 40 Milliequivalenten ionische, in ionische Gruppen überführbare und/oder hydrophile Gruppen pro 100 g Festharz enthalten, bevorzugt enthalten sie anionische Gruppen entsprechend einer Säurezahl zwischen 0 bis 20.

Als Kettenverlängerungsmittel IV) dienen bevorzugt von ionischen und/oder hydrophilen Gruppen freie niedermolekulare, oligomere oder polymere Verbindungen mit gegenüber den reaktiven Gruppen der Komponenten I), II) und III) komplementärer reaktiver Funktionalität, wie eingangs erläutert.

Als bevorzugte NCO-funktionelle Komponenten IV) können für die Herstellung von Polyurethanen bekannte organische Polyisocyanate, insbesondere Diisocyanate eingesetzt werden. Es können aliphatische, aromatische und/oder cycloaliphatische Polyisocyanate eingesetzt werden. Es können auch Polyisocyanate eingesetzt werden, bei denen die die Zahl 2 überschreitende Funktionalität blockiert worden ist.

Als Polyisocyanate können anteilsweise die bekannten drei- und mehrwertigen Lackpolyisocyanate eingesetzt werden. Dabei handelt es sich z.B. um Umsetzungsprodukte von Diisocyanaten zu Oligomeren wie z.B. Isocyanurate, Allophanate, Biurete oder Umsetzungsprodukte mit polyfunktionellen Alkoholen.

Der Bindemittelanteil der erfindungsgemäßen Dispersion wird hergestellt durch Kettenverlängerung der Komponenten I), ggf. II) und in Gegenwart von Komponente I) und/oder II) hergestellter Komponente III) mit dem Kettenverlängerungsmittel IV). Die Kettenverlängerung kann im Sinne einer Eintopfsynthese oder sequentiell durchgeführt werden. Die Überführung des gegebenenfalls neutralisierten Reaktionsprodukts in eine wäßrige Dispersion unter Zusatz einer ausreichenden Wassermenge kann während oder nach der Kettenverlängerung erfolgen. Die Kettenverlängerung läuft in der Harzphase ab. Wenn also das Harz bereits durch Zugabe einer ausreichenden Wassermenge dispergiert ist, so läuft die Kettenverlängerung in den Dispersionsteilchen selbst ab. Bei der Kettenverlängerung werden die Komponenten so eingesetzt, daß molar betrachtet ein Verhältnis der gesamten reaktiven Gruppen der Komponenten I), II) und III) zu den reaktiven Gruppen der Komponente IV) von 1 : 1 bis 10 : 1, bevorzugt 1,05 bis 10 (bevorzugt bis 5) : 1 hergestellt wird.

Vor Überführung in eine wäßrige Dispersion wird ganz oder teilweise neutralisiert, sofern das erfindungsgemäße Bindemittel nicht bereits ionische und/oder hydrophile Gruppen in ausreichender Menge enthält.

Als Neutralisationsmittel für die bevorzugten sauren, zur Anionenbildung befähigten Gruppen kommen z.B. die bekannten organischen Amine oder Ammoniak in Betracht. Es handelt sich dabei um primäre, sekundäre, insbesondere tertiäre Amine, die gegebenenfalls noch weitere funktionelle Gruppen tragen können. Insbesondere sind auch Dialkylalkanolamine bzw. Alkyldialkanolamine geeignet. Sie können der organischen Bindemittellösung (dem erhaltenen Reaktionsprodukt aus I, II, III und IV) zugesetzt werden oder sie werden als wäßrige Lösung eingearbeitet.

Die Dispersionsbildung kann vor oder nach Abschluß der Kettenverlängerungsreaktion erfolgen, dazu wird Wasser in ausreichender Menge mit dem lösemittelfrei oder in organischer Lösung vorliegenden Harz vermischt. Es ist auch möglich die Hauptwassermenge während der Kettenverlängerung zuzugeben. Beispielsweise ist es möglich die neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, d.h. es werden in bekannten Aggregaten, z.B. einem Rotor-Statormischer, gleichzeitig Harz, Wasser und Neutralisationsmittel homogen zusammengemischt. Es ergibt sich eine feinteilige wäßrige Dispersion des erfindungsgemäßen Bindemittels mit einer mittleren Teilchengröße von größer 20 und kleiner als 1000 nm, bevorzugt über 50 und unter 500 nm. Die Verteilung kann dabei monomodal oder bimodal, bevorzugt monomodal sein.

Gegebenenfalls kann es notwendig sein, die bei der Herstellung eingesetzten organischen Lösemittel zu entfernen. Das kann z.B. durch Destillation beispielsweise im Vakuum geschehen. Insbesondere sollten solche Lösemittel aus der Bindemitteldispersion abdestilliert werden, die bei einer Verwendung als Lackbindemittel zu störenden Eigenschaften führen.

Andererseits kann es günstig sein, weitere speziell ausgewählte organische Lösemittel zuzusetzen, um die Eigenschaften der Dispersion zu beeinflussen. So ist es beispielsweise möglich, durch Zugabe von zumindest teilweise mit Wasser mischbaren organischen Lösemitteln, z.B. Glykolen oder Glykolethern, die Stabilität bzw. Wassermischbarkeit der Bindemitteldispersion zu erhöhen.

Einen weiteren Gegenstand der Erfindung bilden die wäßrigen Überzugsmittel, die aus den erfindungsgemäßen wäßrigen Bindemitteldispersionen hergestellt werden können.

Die erfindunsgemäßen Bindemitteldispersionen können unter Zusatz von gegebenenfalls weiteren Bindemitteln, gegebenenfalls Vernetzern, Pigmenten und/oder Füllstoffen sowie lacküblichen Additiven zu wäßrigen Überzugsmitteln, bevorzugt Wasserbasislacken, weiterverarbeitet werden. Die wäßrigen Überzugsmittel können selbsttrocknend (physikalisch trocknend) oder unter Ausbildung kovalenter Bindungen chemisch vernetzend sein.

Die erfindungsgemäßen Überzugsmittel können neben der erfindungsgemäßen wäßrigen Bindemitteldispersion ein oder mehrere weitere Bindemittel enthalten. Dies kann beispielsweise zur Erzielung synergistischer Effekte günstig sein. Beispiele für weitere Bindemittel sind dem Fachmann geläufige übliche filmbildende wasserlösliche oder wasserverdünnbare Harze, wie wasserverdünnbare Polyesterharze, wasserverdünnbare Polyacrylatharze, wasserverdünnbare acrylierte Polyesterharze und/oder wasserverdünnbare Polyurethanharze. Es kann sich um reaktive oder nicht-funktionelle Harze handeln. Die Menge der zugesetzten Harze kann 0 bis 75 Gew.-%, vorzugsweise 0 bis 50 Gew.-% des gesamten Harzfestkörpers betragen. Besonders bevorzugt sind 0 bis 30 Gew.-%. In diesem Zusammenhang bedeutet Harzfestkörper die Summe aller Bindemittel ohne einen Vernetzeranteil.

Bevorzugte als zusätzliche Bindemittel verwendbare wasserverdünnbare Polyester sind beispielsweise solche mit freien Carboxylgruppen, d.h. Polyester mit hoher Säurezahl. Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen. Bei dieser Verfahrensweise wird der Einbau von sterisch gehinderten Carboxylgruppen, beispielsweise durch Kondensation mit Dimethylolpropionsäure, bevorzugt. Nach Neutralisation mit Basen sind die so erhaltenen Polyester wasserverdünnbar. Die zweite Möglichkeit besteht in der Bildung partieller Ester von Di- oder Polycarbonsäuren mit hydroxylreichen Polyestern mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

Bevorzugte als zusätzliche Bindemittel verwendbare wasserverdünnbare Polyacrylatharze können ebenso wie die oben beschriebenen Polyesterharze freie Carboxylgruppen enthalten. Es handelt sich beispielsweise um (Meth)acrylcopolymerisate, und die Carboxylgruppen stammen aus den Anteilen an Acryl- oder Methacrylsäure.

Unter zusätzlichen Polyurethandispersionen sind beispielsweise bevorzugt solche zu verstehen, wie sie in der DE-A-36 28 125 beschrieben werden. Es sind anionisch stabilisierte PU-Dispersionen, die durch Umsetzung von Polyolen, Diisocyanaten, ionischen Verbindungen sowie Kettenverlängerung mit Aminen entstehen können. Weiterhin können auch durch nicht-ionische hydrophile Gruppen stabilisierte PU-Dispersionen den erfindungsgemäßen Überzugsmitteln zugesetzt werden.

Als zusätzliche wasserverdünnbare Bindemittel können auch acrylierte oder gepfropfte Polyester oder Polyurethanharze, wie beispielsweise in DE-A-41 22 265 beschrieben, verwendet werden.

Eine weitere Gruppe von wäßrigen Dispersionen, die den erfindungsgemäßen Überzugsmitteln zugesetzt werden können, sind die in der DE-A-36 28 124 beschriebenen Dispersionen auf Basis von ionischen epoxidgruppenhaltigen Polykondensaten, die mit copolymerisierbaren ungesättigten Monomeren umgesetzt werden.

Bei Zusatz von weiteren Bindemitteln ist es selbstverständlich, daß zusätzliche ionisch stabilisierte Harze und Dispersionen nur zusammen mit gleichartig geladenen erfindungsgemäßen Dispersionen verwendet werden können, um die Stabilität nicht negativ zu beeinflussen.

Zur Bereitung der erfindungsgemäßen Überzugsmittel können verschiedene Vernetzer, beispielsweise Formaldehyd-Kondensationsharze, wie Phenol-Formaldehyd-Kondensationsharze oder Amin-Formaldehydkondensationsharze, sowie freie oder blockierte Polyisocyanate verwendet werden. Die Vernetzer können einzeln und im Gemisch eingesetzt werden. Das Mischungsverhältnis Vernetzer zu Bindemittelharz(en) beträgt bevorzugt 10 : 90 bis 40 : 60, besonders bevorzugt 20 : 80 bis 30 : 70, jeweils bezogen auf das Festkörpergewicht.

Zu als Vernetzer geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesondere Formaldehyd, kondensiert. Beispiele für derartige Harze und ihre Herstellung werden in "Houben-Weyl, Methoden der organischen Chemie" 1963, Seite 357, beschrieben. Diese Produkte sind im Handel geläufig.

Als Vernetzungsmittel können auch blockierte Polyisocyanate eingesetzt werden. Es können beliebige Polyisocyanate verwendet werden, bei denen die Isocyanatgruppen mit einer isocyanatreaktiven, flüchtigen, monofunktionellen Verbindung umgesetzt werden sind. Als Polyisocyanate können Diisocyanate sowie davon abgeleitete Polyisocyanate mit mehr als zwei Isocyanatgruppen pro Molekül dienen, wie beispielsweise Biuret- und Isocyanuratpolyisocyanate oder von einem Polyol durch Reaktion mit überschüssigem Diisocyanat abgeleitete Prepolymere mit endständigen Isocyanatgruppen. Beispielsweise können die als bevorzugte Kettenverlängerungsmittel IV) erläuterten Polyisocyanate verwendet werden.

Die blockierten Polyisocyanate, die erfindungsgemäß als Vernetzer eingesetzt werden können, können mit üblichen flüchtigen einwertigen Blockierungsmitteln blockiert sein, wie sie in der Lackchemie eingesetzt werden. Beispiele hierfür sind verschiedene Alkohole, Oxime, Phenole, Caprolactam, NH-funktionelle Stickstoffheterocyclen, wie Pyrazolderivate oder Triazolderivate, Amine, CH-acide Verbindungen wie Malonester oder Acetessigester, und Phthalimid. Die Polyisocyanate können in einem Molekül mit gleichen oder verschiedenen Blockierungsmitteln blockiert sein. Als Vernetzer können auch Gemische unterschiedlich blockierter Polyisocyanate verwendet werden sowie auch Polyisocyanate, die intramolekular unterschiedlich blockiert sind.

Für Zweikomponenten-Überzugsmittel werden die Vernetzer unmittelbar vor der Applikation zugesetzt. Es werden dabei bevorzugt freie Polyisocyanate eingesetzt. Dabei können die gleichen Polyisocyanate verwendet werden, wie sie bei der Herstellung der blockierten Polyisocyanate eingesetzt werden.

Weiterhin können die erfindungsgemäßen Überzugsmittel dem Fachmann bekannte Polymermikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die erfindungsgemäßen Überzugsmittel lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polypeptide, Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate. Daneben können auch Antiabsetzmittel, Verlaufsmittel, Lichtschutzmittel, Antischaummittel, wie beispielsweise silikonhaltige Verbindungen; Netzmittel sowie haftvermittelnde Substanzen eingesetzt werden. Unter Netzmittel werden auch bekannte Pastenharze verstanden, wie sie z.B. in der EP-A-0 438 090 beschrieben sind, die zum besseren Dispergieren und Vermahlen der Pigmente eingesetzt werden können. Zum Beschleunigen der Härtung können gegebenenfalls Katalysatoren eingesetzt werden, es ist jedoch auch möglich durch thermische Energie ohne Einsatz eines Katalysators zu härten.

Als in geringen Mengen vorhandene Lösemittel sind übliche lacktechnische Lösemittel geeignet, diese können von der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1-6-Alkyl, Ethoxypropanol, Butylglykol; Glykole z.B. Ethylenglykol; Propylenglykol, und dessen Oligomere, N-Methylpyrrolidon sowie Ketone wie Methylethylketon, Aceton, Cyclohexanon.

Die erfindungsgemäßen Überzugsmittel können ein oder mehrere anorganische und/oder organische farb- und/oder effektgebende Pigmente und gegebenenfalls zusätzlich mindestens einen Füllstoff enthalten.

Beispiele für effektgebende Pigmente sind Metallpigmente, z.B. aus Aluminium, Kupfer oder anderen Metallen, Interferenzpigmente wie z.B. metalloxidbeschichtete Metallpigmente, z.B. titandioxidbeschichtetes Aluminium, beschichtete Glimmer wie z.B. titandioxidbeschichteter Glimmer und Graphiteffektpigmente. Beispiele für farbgebende Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Azopigmente, Phthalocyaninpigmente, Chinacridonpigmente, Pyrrolopyrrolpigmente, Perylenpigmente.

Die Effektpigmente werden im allgemeinen in Form einer handelsüblichen wäßrigen oder nicht-wäßrigen Paste vorgelegt, gegebenenfalls mit bevorzugt wasserverdünnbaren, organischen Lösemitteln und Additiven versetzt und danach mit dem wäßrigen Bindemittel unter Scheren vermischt. Pulverförmige Effektpigmente können zunächst mit bevorzugt wasserverdünnbaren organischen Lösemitteln und Additiven zu einer Paste verarbeitet werden. Es ist darauf zu achten, daß die plättchenförmigen Effektpigmente beim Vermischen nicht mechanisch beschädigt werden.

Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Ein Beispiel für ein im erfindungsgemäßen Wasserbasislack bevorzugt einsetzbares Pastenharz auf Polyurethanbasis findet sich in der EP-A-0 438 090, welches im übrigen auch ein zwecks Verbesserung des Lackstandes und insbesondere der Steinschlagfestigkeit hervorragend geeignetes Cobindemittel darstellt für den Einsatz in farb- und/oder effektgebenden Basislacken auf Lösemittelbasis. Das Anreiben kann in üblichen, dem Fachmann bekannten Aggregaten erfolgen.

Danach wird mit dem restlichen Anteil des wäßrigen Bindemittels oder des wäßrigen Pastenharzes zur fertigen Farbpigmentanreibung komplettiert. Sind im Überzugsmittel Pastenharze vorhanden, so addieren sich diese bei der Berechnung des Harzfestkörpers zu Bindemittel plus gegebenenfalls vorhandenem Vernetzer.

Bei den auf Basis der erfindungsgemäßen wäßrigen Bindemitteldispersionen hergestellten Überzugsmitteln handelt es sich um Überzugsmittel beispielsweise zur Herstellung von farb- und/oder effektgebenden Basisschichten, Füller- oder Steinschlagschutzschichten oder Uni-Decklackschichten. Besonders geeignet sind die erfindungsgemäßen Bindemitteldispersionen für die Herstellung von wäßrigen Basislacken, wie sie für Mehrschichtlackierungen eingesetzt und mit transparenten Klarlacken überlackiert werden. Ein solcher Wasserbasislack besitzt beispielsweise einen Festkörpergehalt von 10-50 Gew.-%, für Effektbasislacke liegt er beispielsweise bevorzugt bei 15-30 Gew.-%, für unifarbige Basislacke liegt er bevorzugt höher, beispielsweise bei 20-45 Gew.-%. Das Verhältnis von Pigment zu Bindemittel plus gegebenenfalls Vernetzer plus gegebenenfalls Pastenharz im Wasserbasislack beträgt beispielsweise zwischen 0,03 : 1 bis 3 : 1, für Effektbasislacke liegt es beispielsweise bevorzugt bei 0,06 : 1 bis 0,6 : 1, für unifarbige Basislacke liegt es bevorzugt höher, beispielsweise bei 0,06 : 1 bis 2,5 : 1, jeweils bezogen auf das Festkörpergewicht.

Der Lösemittelanteil der erfindungsgemäßen Wasserbasislacke beträgt bevorzugt unter 20 Gew.-%, besonders bevorzugt unter 15 Gew.-%, insbesondere bevorzugt unter 10 Gew.-%.

Die erfindungsgemäßen Wasserbasislacke können nach üblichen Methoden appliziert werden. Bevorzugt werden sie durch Spritzen in einer Trockenschichtdicke von 8 bis 50 µm appliziert, für Effektbasislacke liegt die Trockenschichtdicke beispielsweise bevorzugt bei 10 bis 25 µm, für unifarbige Basislacke liegt sie bevorzugt höher, beispielsweise bei 10 bis 40 µm. Die Applikation erfolgt bevorzugt im Naß-in-Naß-Verfahren, d.h. nach einer Ablüftphase, z.B. bei 20-80°C, werden die Wasserbasislackschichten mit einem üblichen Klarlack in einer Trockenschichtdicke von bevorzugt 30-60 µm überlackiert und gemeinsam mit diesem bei Temperaturen von beispielsweise 20 bis 140°C getrocknet oder vernetzt. Die Trocknungsbedingungen der Decklackschicht (Basislack und Klarlack) richten sich nach dem verwendeten Klarlacksystem. Sie können beispielsweise bei 20 bis 150°C liegen. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Als Klarlack sind gründsätzlich alle bekannten Klarlacke oder transparent pigmentierten Überzugsmittel geeignet. Hierbei können sowohl lösungsmittelhaltige 1- oder 2-Komponenten-Lacke, wasserverdünnbare Klarlacke, Pulverklarlacke oder durch Strahlung härtbare Klarlacke eingesetzt werden.

So erstellte Mehrschichtlackierungen können auf verschiedenste Arten von Substraten aufgebracht werden. Im allgemeinen handelt es sich um metallische oder Kunststoff-Untergründe. Diese sind häufig vorbeschichtet, d.h. Kunststoffsubstrate können z.B. mit einer Kunststoff-grundierung versehen sein, metallische Substrate besitzen im allgemeinen eine elektrophoretisch aufgebrachte Grundierung und gegebenenfalls zusätzlich eine oder mehrere weiter Lackschichten, wie z.B. eine Füllerschicht (Primer-Surfacer). Diese Schichten sind im allgemeinen ausgehärtet. Der erfindungsgemäße Wasserbasislack kann jedoch auch auf unvernetzte Füllerschichten wie z.B. in EP-A-0 238 037 beschrieben, naß-in-naß appliziert werden. In diesem Falle wird der Basislack im allgemeinen vor Auftrag einer Klarlackdeckschicht gemeinsam mit der Füllerschicht eingebrannt.

Es ist auch möglich den erfindungsgemäßen Wasserbasislack direkt, ohne weitere Zwischenschichten auf eine eingebrannte oder nicht-eingebrannte Elektrotauchlackschicht zu applizieren, wie dies auch für andere bekannte Basislacke auf Lösemittelbasis oder Wasserbasis möglich ist.

Die erfindungsgemäßen Überzugsmittel sind auch hervorragend geeignet zur Lackierung anderer Substrate, insbesondere mineralischer Substrate, wie Beton, Holz, sowie zur Beschichtung von Folien (Kunststoff- und Papierfolien) und zum Herstellen dünner Schichten zum Verkleben von mehreren Substraten.

Mit erfindungsgemäßen Wasserbasislacken erhaltene Mehrschichtlackierungen entsprechen den heute üblichen Anforderungen in der Kraftfahrzeuglackierung. Die erfindungsgemäßen Wasserbasislacke sind geeignet für die Fahrzeugerstlackierung inclusive zur Reparaturlackierung im Rahmen der Serienlackierung, z.B. bei der Endmontagenreparaturlackierung, sowie im Bereich der Autoreparaturlackierung außerhalb des Automobilwerks, sie können jedoch auch in anderen Bereichen, z.B. der Kunststofflackierung, insbesondere der Fahrzeugteilelackierung, eingesetzt werden. Die Einbrennbedingungen für die Reparaturlackierung können z.B. im Bereich von 60 bis 160°C liegen.

Die Erfindung betrifft weiterhin ein Substrat, beschichtet mit einem Mehrschichtüberzug, der erhalten worden ist durch Aufbringen mindestens einer Grundierungsschicht, bevorzugt auf Basis eines wasserverdünnbaren Überzugsmittels, Aufbringen einer farb- und/oder effektgebenden Basislackschicht mit einem erfindungsgemäßen Überzugsmittel, gegebenenfalls Trocknen der Basisschicht und Aufbringen eines transparenten Überzugsmittels als Deckschicht und anschließende Erhitzung des beschichteten Substrates. Es können zu dieser Mehrschichtlackierung gegebenenfalls weitere zusätzliche Schichten hinzugefügt werden.

Die erfindungsgemäße Mehrschichtlackierung weist eine gute Oberfläche und Steinschlagfestigkeit auf. Die Haftung zwischen den Schichten und der Basislackschicht ist gut und zeigt auch bei Belastung im Feuchtraumklima keine Enthaftungsstörungen. Ebenfalls gut ist die Haftung einer auf die ungeschliffene äußere Klarlackschicht einer Mehrschichtlackierung, beispielsweise erfindungsgemäßen Mehrschichtlackierung aufgebrachten zweischichtigen Reparaturlackierung, welche unter Verwendung des erfindunsgemäßen wäßrigen Überzugsmittels erstellt wird. Die Erfindung eignet sich besonders zur Verwendung in der Automobillackierung (Serien- und Reparaturlackierung).

### Beispiel 1 (Herstellung eines hydroxyfunktionellen Acrylatharzes):

598,6 g Methylisobutylketon werden auf 110°C erwärmt. Über einen Zeitraum von 4 Stunden wird eine Mischung aus 1106,8 g Hydroxypropylacrylat, 276,8 g Butylacrylat und 13,8 g tert.-Butyl-per-2-ethylhexanoat gleichmäßig zudosiert. Danach wird noch eine Stunde bei 110°C gehalten. Anschließend werden 4 g tert.-Butyl-per-2-ethylhexanoat zugegeben. Der Ansatz wird noch 1,5 Stunden bei 110°C gehalten.

### Beispiel 2 (Herstellung eines verzweigten hydroxyfunktionellen Polyesters):

644 g Trimethylolpropan, 542 g Kokosfettsäure, 511 g 1,4-Cyclohexandicarbonsäure und 100 g Xylol werden so lange unter azeotroper Abdestillation von Reaktionswasser erhitzt, bis eine Säurezahl von 2 mg KOH/g unterschritten ist. Anschließen wird das Xylol abdestilliert.

### Beispiel 3 (Herstellung eines Bindemittels):

### a) Herstellung eines carboxyfunktionellen, epoxidgruppenhaltigen Polymeren:

In eine Lösung von 141 g eines Polyesters (OH-Zahl = 88 mg KOH/g), hergestellt auf der Basis von Phthalsäureanhydrid, Isophthalsäure, Maleinsäureanhydrid, Propanol und Glycerin wie in der DE-OS 28 11 913 beschrieben, in 70 g Methylethylketon, wurden 100 g eines Anhydridgemisches (SZ/H₂O = 486 mg KOH/g), hergestellt durch Umsetzung von Trimellithsäureanhydrid mit Propandiol-1,2, bestehend somit aus Trimellithsäureanhydrid und Anhydriden der nachstehenden Formeln 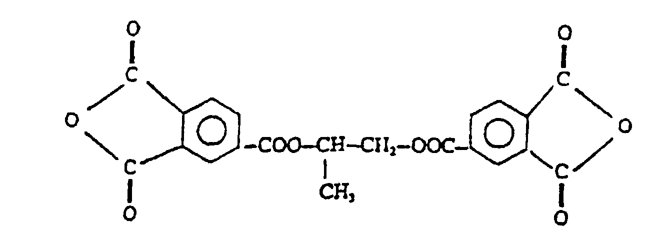 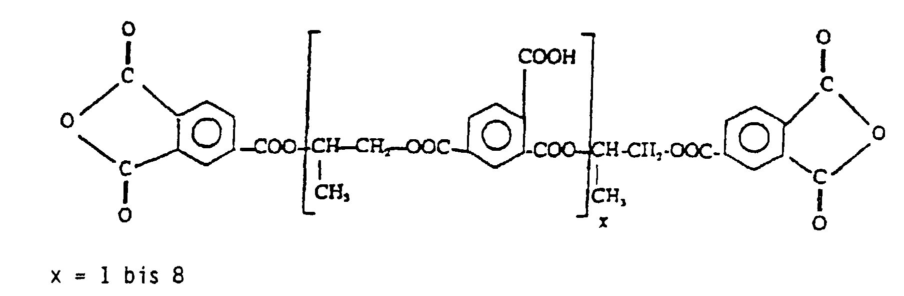 die in 108 g Xylol bei 50°C homogenisiert worden waren, innerhalb 1 Stunde zugetropft. Bei 90°C wurde so lange gerührt, bis das Reaktionsgemisch eine Säurezahl in Wasser von 165 mg KOH/g (100 %iges Harz) erreicht hatte. Danach wurden 12 g Wasser zugemischt und nach 6-stündigem Rühren bei 80 bis 90°C eine Säurezahl in Butanol von 168 mg KOH/g (100 %iges Harz) erreicht. Die Gemischtemperatur wurde auf 60°C gesenkt und nach Zugabe von 0,3 g Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42 g Dimethylamin (60 %ig in Wasser) in 860 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt: 32 % (1 Stunde bei 125°C).

### b) Herstellung einer Polymerisatdispersion

In einen Reaktor, ausgerüstet mit Rührer, Rückflußkühler, Innenthermometer und Dosiervorrichtung für die Monomeren, sowie den Initiator, wurden 705 g der vorstehenden wäßrigen (32 %igen) Dispersion und 196 g Wasser gefüllt. Diese Mischung wurde unter Rühren auf 80°C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion, die mit deionisiertem Wasser auf einen Feststoffgehalt von 35 Gew.-% eingestellt wurde.

### Beispiel 4 (Herstellung einer Dispersion eines Hybridpolymeren, Vergleichsbeispiel)

28,8 g Dimethylolpropionsäure, 374,6 g Aceton und 164,8 g N-Methylpyrrolidon werden eingewogen und auf 65°C erwärmt. Nach Auflösung der Säure werden bei 50°C 108 g Isophorondiisocyanat (IPDI) zugegeben. Anschließend wird auf 65°C erwärmt und unter Rückfluß so lange gehalten, bis eine NCO-Zahl von ca. 4 %, erreicht ist. Danach werden bei 50°C 325,2 g eines Polyesters aus Adipinsäure, Hexandiol und Isophthalsäure (OH-Zahl = 105 mg KOH/g) und 1,8 g Trimethylolpropan zugesetzt. Unter Rückfluß wird so lange erwärmt, bis eine NCO-Zahl kleiner 0,3 % erreicht ist. Bei 50°C werden nacheinander 93 g des Acrylatharzes aus Beispiel 1, 27 g IPDI und 0,6 g Dibutylzinndilaurat (DBTL) zugegeben. Unter Rückfluß wird so lange gehalten, bis eine NCO-Zahl kleiner 0,3 % erreicht ist. Danach werden bei 50°C 47,4 g einer 50 %igen wäßrigen Dimethylisopropanolamin-Lösung zugegeben und 15 Minuten gehalten. Anschließend werden 828,6 g deionisiertes Wasser innerhalb von 15 Minuten zur Dispersionsbildung zugegeben. Nach der Dispersionsbildung wird auf 90°C geheizt und Aceton und Methylisobutylketon unter Vakuum abdestilliert.

### Beispiel 5 (Herstellung einer Dispersion eines Hybridpolymeren, erfindungsgemäß):

Es wird wie in Beispiel 4 gearbeitet mit dem Unterschied, daß nach Zusatz des Trimethylolpropans und Umsetzung bis zum Erreichen einer NCO-Zahl kleiner 0,3 % bei 110°C eine Mischung aus 28 g Methylisobutylketon, 51,4 g Hydroxypropylacrylat, 13,6 g Butylacrylat und 0,9 g tert.-Butyl-per-2-ethylhexanoat innerhalb 1,5 Stunden gleichmäßig zudosiert wird. Nach 1 Stunde werden weitere 0,3 g tert.-Butyl-per-2-ethylhexanoat zugesetzt und weitere 1,5 Stunden bei 110°C gehalten. Nach Abkühlen auf 50°C und Zugabe von 27 g IPDI und 0,6 g DBTL wird wie in Beispiel 4 weiter gearbeitet.

### Belspiel 6 (Herstellung einer Dispersion eines Hybridpolymeren, Vergleichsbeispiel):

34,2 g Dimethylolpropionsäure, 414 g eines Polyesters aus Adipinsäure, Hexandiol und Isophthalsäure (OH-Zahl = 105 mg KOH/g) und 204,8 g N-Methylpyrroldion werden eingewogen und auf 80°C erwärmt. Ist die Säure gelöst, wird auf 50°C gekühlt und 125,4 g IPDI und 0,7 g DBTL zugegeben. Anschließend wird auf 80°C erwärmt und so lange gehalten, bis eine NCO-Zahl kleiner 0,3 % erreicht ist. Anschließend werden 25,2 g des Polyesters aus Beispiel 2 (OH-Zahl = 220 mg KOH/g) und 84 g des Acrylatharzes aus Beispiel 1 zugesetzt, und auf 80°C erwärmt. Bei 80°C werden 31,4 g IPDI zugesetzt. Es wird so lange gehalten, bis eine NCO-Zahl kleiner 0,3 % erreicht ist. Danach werden bei 80°C 55 g einer 50 %igen wäßrigen Dimethylisopropanolamin-Lösung zugegeben und 15 Minuten gehalten. Anschließend werden 1022,4 g deionisiertes Wasser innerhalb von 15 Minuten zur Dispersionsbildung zugegeben. Nach der Dispersionsbildung wird zur Homogenisierung 3 Stunden bei 80°C gehalten und anschließend bei 90°C im Vakuum das Methylisobutylketon abdestilliert.

### Beispiel 7 (Herstellung einer Dispersion eines Hybridpolymeren, erfindungsgemäß):

Zunächst wird wie in Beispiel 6 gearbeitet mit dem Unterschied, daß nach Zugabe des Polyesters aus Beispiel 2 und Aufheizen auf 110°C eine Mischung aus 27 g Methylisobutylketon, 11,6 g Butylacrylat, 46,6 g Hydroxypropylacrylat und 0,6 g tert.-Butyl-per-2-ethylhexanoat über einen Zeitraum von 1,5 Stunden zudosiert wird. Anschließend wird der Ansatz 1 Stunde bei 110°C gehalten und dann werden 0,2 g tert.-Butyl-per-2-ethylhexanoat zugegeben. Nach weiteren 1,5 Stunden bei 110°C wird auf 80°C gekühlt und 31,4 g IPDI zugesetzt. Anschließend wird wie in Beispiel 6 weiter verfahren.

### Herstellung von Wasserbasislacken (Silbermetallic) und Mehrschichtlackierungen

### Beispiel 8a - d:

20 g einer handelsüblichen, für Wasserbasislack geeigneten Aluminiumpaste mit 65 Gew.-% Aluminium, 20 g Butylglykol, 6 g N-Methylpyrrolidon und 1 g eines handelsüblichen Netzmittels werden miteinander zum Bronzeaufschluß vermischt. Danach werden 1,4 g eines handelsüblichen Verdickers auf Polyacrylsäurebasis (Festkörper: 10 Gew.-%, pH-Wert 7,5) hinzugemischt. Danach werden 90 g der Dispersion aus Beispiel 4 - 7, 60 g der Dispersion aus Beispiel 3b und 40 g eines üblichen Pastenharzes (gemäß Beispiel aus DE-A-40 00 889) in den Bronzeaufschluß eingerührt. Anschließend werden unter Rühren 24 g eines handelsüblichen Melaminharzes (Setamine US 138/BB 70 der Firma AKZO) unter Rühren zugesetzt. Die erhaltenen Wasserbasislacke werden jeweils auf übliche phsophatierte und durch kathodische Tauchlackierung und mit Füller vorbeschichtete Karosseriebleche durch Spritzen in einer Trockenschichtdicke von 15 µm aufgebracht. Nach der Applikation wird kurz abgelüftet und anschließend 10 Minuten bei 80°C vorgetrocknet. Anschließend wird jeweils mit handelsüblichem 2K-HS-Autoserienklarlack (Zweikomponenten-High-Solid-Klarlack auf Acrylharz/Polyisocyanat-Basis) in einer Trockenschichtdicke von 35 µm überlackiert und 30 Minuten bei 130°C (Objekttemperatur) getrocknet. Weiterhin werden zwei Versuchsreihen durchgeführt:
1) Die eingebrannte und ungeschliffene Klarlackschicht wird jeweils unter den Bedingungen einer Endmontagenreparatur überlackiert, d.h. der aus Wasserbasislack- und Klarlackschicht bestehende Zweischichtlackaufbau wird wiederholt aufgebracht, wobei die Wasserbasislackschicht 5 Minuten bei 80°C vorgetrocknet und gemeinsam mit der Klarlackschicht 30 Minuten bei 85°C (Objekttemperatur) getrocknet wird.
2) Es wird wie unter 1) gearbeitet jedoch mit dem Unterschied, daß die Wasserbasislackschicht gemeinsam mit der Klarlackschicht 30 Minuten bei 140°C (Objekttemperatur) getrocknet wird.

Geprüft wird jeweils die Haftung der aus Basislack- und Klarlackschicht bestehenden Zweischichtlackaufbauten vor und nach Schwitzwasserbelastung a) als Erstlackierung, b) als Reparaturlackierung wie unter 1) bzw. 2) erhalten. Die Prüfung erfolgt durch Gitterschnitt nach DIN EN-ISO 2409. Weiterhin wird die Steinschlagfestigkeit der Lackaufbauten (VDA-Steinschlag) geprüft. Tabelle 1 stellt die erhaltenen Gitterschnitt-Werte, Tabelle 2 die erhaltenen Steinschlagergebnisse zusammen.

**Tabelle 1**

| Lackierung | Haftung als Erstlackierung | | | Haftung als Reparaturlackierung | |
|---|---|---|---|---|---|
| | v | n(1h) | n(24h) | 1) n(24h) | 2) n(24h) |
| 8a (Vgl.) | 2-3 | 3 | 2 | 2-3 | 2 |
| 8b (erf.) | 1-2 | 2-3 | 1 | 2 | 1-2 |
| 8c (Vgl.) | 2-3 | 4 | 2 | 2 | 2 |
| 8d (erf.) | 1-2 | 1 | 1 | 1-2 | 1 |

**Tabelle 2**

| Lackierung | VDA-Steinschlag an der Erstlackierung | VDA-Steinschlag an der Reparaturlackierung 1) |
|---|---|---|
| 8a (Vgl.) | 3 | 6 |
| 8b (erf.) | 2 | 5 |
| 8c (Vgl.) | 2-3 | 5 |
| 8d (erf.) | 1-2 | 3-4 |

### Legende zu Tabelle 1 und 2

- Vgl. :: Vergleichsversuch
- erf. :: erfindungsgemäßes Beispiel
- v, n(1h), n(24h):: vor, eine Stunde nach bzw. 24 Stunden nach Schwitzwasserbelastung gemäß DIN 50017 (240 Stunden bei 40°C)

VDA-Steinschlag: Prüfung mittels Steinschlag-Prüfgerät nach VDA (Fa. Erichsen, Modell 508, bei +20°C mit 2 mal 500 g Stahlschrot (kantig, 4-5 mm), beschleunigt durch Druckluft von 1,5 bar.

Bewertung: a) Erstlackierung, 0 = keine Abplatzung vom Füller, 10 = vollständige Enthaftung;
b) Reparaturlackierung, 0 = keine Abplatzung der aus Basislack- und Klarlackschicht bestehenden zweischichtigen Reparaturlackierung von der darunter liegenden Klarlackschicht, 10 = vollständige Enthaftung von der darunter liegenden Klarlackschicht.

## Patentansprüche

1. Für Überzugsmittel geeignete, wäßrige Bindemitteldispersion erhältlich durch gemeinsame Umsetzung von
I. 20 bis 97 Gew.-% eines oder mehrerer Polyurethanharze und/oder Polyurethanharnstoffharze mit mindestens einer gegenüber einem Kettenverlängerungsmittel IV) reaktiven Gruppe, mit einem Zahlenmittel der Molmasse (Mn) von 1000 bis 10000, und 8 bis 80 mEqu pro 100 g Festharz ionischen, in ionische Gruppen überführbaren und/oder hydrophilen Gruppen,
II. 0 bis 30 Gew.-% eines oder mehrerer Polyesterharze mit einem Zahlenmittel der der Molmasse (Mn) von 500 bis 5000 sowie zwei oder mehreren gegenüber dem Kettenverlängerungsmittel IV) gleichen reaktiven Gruppen wie in I), und
III. 3 bis 80 Gew.-% eines oder mehrerer (Meth)acrylcopolymerer mit 0 bis 40 mEqu pro 100 g Festharz ionischen Gruppen mit gleicher Ladung wie in Komponente I) oder in solche ionische Gruppen überführbaren Gruppen und/oder hydrophilen Gruppen, mit mindestens zwei gegenüber dem Kettenverlängerungsmittel IV) gleichen reaktiven Gruppen wie in I) und II),
wobei die Summe der Gew.-% der Komponenten I) bis III) 100 Gew.-% ergibt
und wobei mindestens 50 Gew.-% der Komponente III) bezogen auf die Gesamtmenge der Komponente III) in Gegenwart von einer oder mehreren der Komponenten I) und/oder II), entsprechend mindestens 20 Gew.-% der Gesamtmenge der Summe der Komponenten I) und II) hergestellt worden sind, mit
IV. einem oder mehreren Kettenverlängerungsmitteln IV), das zwei oder mehr reaktive Gruppen aufweist, die mit den reaktiven Gruppen aus den Komponenten I), II) und III) reaktiv sind,
Neutralisation mindestens eines Teils von gegebenenfalls vorhandenen in ionische Gruppe überführbaren Gruppen, sowie Überführung in die Wasserphase.

2. Bindemitteldispersion nach Anspruch 1. dadurch gekennzeichnet, daß die reaktiven Gruppen der Komponenten I. II und III Hydroxylgruppen, primäre Aminogruppen, sekundäre Aminogruppen, Hydrazingruppen. Alkoxysilangruppen, Aldehydgruppen, 1,3-Dicarbonylfunktionen, CH-acide Gruppen oder Isocyanatgruppen sind.

3. Bindemitteldispersion nach Anspruch 2, dadurch gekennzeichnet, daß die reaktiven Gruppen des Kettenverlängerungsmittels IV aus den in Anspruch 2 aufgeführten Gruppen mit komplementärer Reaktionsfähigkeit zu den in den Komponenten I, II und III eingesetzten Gruppen ausgewählt sind.

4. Bindemitteldispersion nach einem der vorhergehenden Ansprüche, dadurch gekennzeichnet, daß die Komponenten I, II und III Hydroxylgruppen oder Isocyanatgruppen und der Kettenverlängerer IV Isocyanatgruppen oder Hydroxylgruppen aufweisen.

5. Bindemitteldispersion nach einem der vorhergehenden Ansprüche, dadurch gekennzeichnet, daß das Kettenverlängerungsmittel IV in einem molaren Verhältnis der gegenüber IV reaktiven Gruppen aus I, II und III zu den reaktiven Gruppen von IV von 1 : 1 bis 10 : 1 eingesetzt wird.

6. Bindemitteldispersion nach einem der Ansprüche 1 bis 5, dadurch gekennzeichnet, daß die reaktiven Gruppen in I, II und III Alkoxysilangruppen oder Isocyanatgruppen sind und als Kettenverlängerer IV Wasser eingesetzt wird.

7. Verfahren zur Herstellung der für Überzugsmittel geeigneten, wäßrigen Bindemitteldispersion nach Anspruch 1, dadurch gekennzeichnet, daß man
I. 20 bis 97 Gew.-% eines oder mehrerer Polyurethanharze und/oder Polyurethanharnstoffharze mit mindestens einer gegenüber einem Kettenverlängerungsmittel IV) reaktiven Gruppe, mit einem Zahlenmittel der Molmasse (Mn) von 1000 bis 10000, und 8 bis 80 mEqu pro 100 g Festharz ionischen, in ionische Gruppen überführbaren und/oder hydrophilen Gruppen,
II. 0 bis 30 Gew.-% eines oder mehrerer Polyesterharze mit einem Zahlenmittel der Molmasse (Mn) von 500 bis 5000 sowie zwei oder mehreren gegenüber dem Kettenverlängerungsmittel IV) gleichen reaktiven Gruppen wie in I), und
III. 3 bis 80 Gew.-% eines oder mehrerer (Meth)acrylcopolymerer mit 0 bis 40 mEqu pro 100 g Festharz ionischen Gruppen mit gleicher Ladung wie in Komponente I) oder in solche ionische Gruppen überführbaren Gruppen und/oder hydrophilen Gruppen, mit mindestens zwei gegenüber dem Kettenverlängerungsmittel IV) gleichen reaktiven Gruppen wie in I) und II)
wobei die Summe der Gew.-% der Komponenten I) bis III) 100 Gew.-% ergibt
und wobei mindestens 50 Gew.-% der Komponente III) bezogen auf die Gesamtmenge der Komponente III) in Gegenwart von einer oder mehreren der Komponenten I) und/oder II), entsprechend mindestens 20 Gew.-% der Gesamtmenge der Summe der Komponenten I) und II) hergestellt worden sind, mit
IV. einem oder mehreren Kettenverlängerungsmitteln IV), das zwei oder mehr reaktive Gruppen aufweist, die mit den reaktiven Gruppen aus den Komponenten I), II) und III) reaktiv sind,
umsetzt. mindestens einen Teil von gegebenenfalls vorhandenen in ionische Gruppe überführbaren Gruppen neutralisiert und in die Wasserphase überführt.

8. Verfahren nach Anspruch 7, dadurch gekennzeichnet. daß die reaktiven Gruppen der Komponenten I, II und III Hydroxylgruppen, primäre Aminogruppen, sekundäre Aminogruppen, Hydrazingruppen, Alkoxysilangruppen, Aldehydgruppen, 1,3-Dicarbonylfunktionen, CH-acide Gruppen oder Isocyanatgruppen sind.

9. Verfahren nach Anspruch 8, dadurch gekennzeichnet, daß die reaktiven Gruppen des Kettenverlängerungsmittels IV aus den in Anspruch 8 aufgeführten Gruppen mit komplementärer Reaktionsfähigkeit zu den in den Komponenten I, II und III eingesetzten Gruppen ausgewählt sind.

10. Verfahren nach einem der Ansprüche 7 bis 9, dadurch gekennzeichnet, daß die Komponenten I, II und III Hydroxylgruppen oder Isocyanatgruppen und der Kettenverlängerer IV Isocyanatgruppen oder Hydroxylgruppen aufweisen.

11. Verfahren nach einem der vorhergehenden Ansprüche, dadurch gekennzeichnet, daß das
Kettenverlängerungsmittel IV in einem molaren Verhältnis der gegenüber IV reaktiven Gruppen aus I, II und III zu den reaktiven Gruppen von IV von 1 : 1 bis 10 : 1 eingesetzt wird.

12. Verfahren nach einem der Ansprüche 7 bis 11, dadurch gekennzeichnet, daß die reaktiven Gruppen in I, II und III Alkoxysilangruppen oder Isocyanatgruppen sind und als Kettenverlängerer IV Wasser eingesetzt wird.

13. Wäßriges Überzugsmittel, enthaltend eine wäßrige Dispersion gemäß einem der Ansprüche 1 bis 6.

14. Überzugsmittel nach Anspruch 13, dadurch gekennzeichnet, daß es zusätzlich andere Bindemittel und/oder Vernetzer enthält.

15. Verwendung der wäßrigen Dispersionen nach einem der Ansprüche 1 bis 6, sowie der Überzugsmittel nach Anspruch 13 und 14 zur Herstellung von Mehrschichtlackierungen.

16. Verwendung nach Anspruch 15 zur Herstellung von Mehrschichtlackierungen auf dem Kraftfahrzeugsektor.

17. Verwendung nach Anspruch 16 zur Herstellung von Füllerschichten und/oder Basislackschichten und/oder Klarlackschichten bei der Mehrschichtlackierung.

18. Verwendung nach Anspruch 16 zur Herstellung von Reparaturlackierungen, insbesondere zur Herstellung von Endmontagereparaturlackierungen auf dem Kraftfahrzeugsektor.

## Claims

1. Aqueous binder dispersion suitable for coating compositions and obtainable by jointly reacting
I. 20 to 97 wt.% of one or more polyurethane resins and/or polyurethaneurea resins having at least one group reactive towards a chain extender IV), having a number average molecular weight (Mn) of 1000 to 10000, and 8 to 80 meq per 100 g of solid resin of groups which are ionic, convertible into ionic groups and/or hydrophilic,
II. 0 to 30 wt.% of one or more polyester resins having a number average molecular weight (Mn) of 500 to 5000 as well as two or more of the same reactive groups as in I) which are reactive towards the chain extender IV), and
III. 3 to 80 wt.% of one or more (meth)acrylic copolymers having 0 to 40 meq per 100 g of solid resin of ionic groups having the same charge as in component I) or groups which are convertible into such ionic groups and/or hydrophilic groups, having at least two of the same reactive groups as in I) and II) which are reactive towards the chain extender IV),
wherein the sum of weight percentages of components I) to III) amounts to 100 wt.%
and wherein at least 50 wt.% of component III), relative to the entire quantity of component III), was produced in the presence of one or more of components I) and/or II), corresponding to at least 20 wt.% of the total quantity of the sum of components I) and II), with
IV) one or more chain extenders IV) which has/have two or more reactive groups which are reactive with the reactive groups from components I), II) and III),
neutralising at least a proportion of optionally present groups which are convertible into ionic groups, as well as converting the mixture into the aqueous phase.

2. Binder dispersion according to claim 1, characterised in that the reactive groups of components I, II and III are hydroxyl groups, primary amino groups, secondary amino groups, hydrazine groups, alkoxysilane groups, aldehyde groups, 1,3-dicarboxyl functions, CH-acidic groups or isocyanate groups.

3. Binder dispersion according to claim 2, characterised in that the reactive groups of the chain extender IV are selected from the groups listed in claim 2 having reactivity complementary to the groups used in components I, II and III.

4. Binder dispersion according to one of the preceding claims, characterised in that components I, II and III have hydroxyl groups or isocyanate groups and the chain extender IV has isocyanate groups or hydroxyl groups.

5. Binder dispersion according to one of the preceding claims, characterised in that the chain extender IV is used in a molar ratio of the reactive groups from I, II and III which are reactive towards IV to the reactive groups of IV of 1:1 to 10:1.

6. Binder dispersion according to one of claims 1 to 5, characterised in that the reactive groups in I, II and III are alkoxysilane groups or isocyanate groups and water is used as the chain extender IV.

7. Process for the production of the aqueous binder dispersion according to claim 1 suitable for the production of coating compositions, characterised in that
I. 20 to 97 wt.% of one or more polyurethane resins and/or polyurethaneurea resins having at least one group reactive towards a chain extender IV), having a number average molecular weight (Mn) of 1000 to 10000, and 8 to 80 meq per 100 g of solid resin of groups which are ionic, convertible into ionic groups and/or hydrophilic,
II. 0 to 30 wt.% of one or more polyester resins having a number average molecular weight (Mn) of 500 to 5000 as well as two or more of the same reactive groups as in I) which are reactive towards the chain extender IV), and
III. 3 to 80 wt.% of one or more (meth)acrylic copolymers having 0 to 40 meq per 100 g of solid resin of ionic groups having the same charge as in component I) or groups which are convertible into such ionic groups and/or hydrophilic groups, having at least two of the same reactive groups as in I) and II) which are reactive towards the chain extender IV),
wherein the sum of weight percentages of components I) to III) amounts to 100 wt.%
and wherein at least 50 wt.% of component III), relative to the entire quantity of component III), was produced in the presence of one or more of components I) and/or II), corresponding to at least 20 wt.% of the total quantity of the sum of components I) and II), are reacted with
IV) one or more chain extenders IV) which has/have two or more reactive groups which are reactive with the reactive groups from components I), II) and III),
at least a proportion of optionally present groups which are convertible into ionic groups is neutralised, and the mixture is converted into the aqueous phase.

8. Process according to claim 7, characterised in that the reactive groups of components I, II and III are hydroxyl groups, primary amino groups, secondary amino groups, hydrazine groups, alkoxysilane groups, aldehyde groups, 1,3-dicarboxyl functions, CH-acidic groups or isocyanate groups.

9. Process according to claim 8, characterised in that the reactive groups of the chain extender IV are selected from the groups listed in claim 8 having reactivity complementary to the groups used in components I, II and III.

10. Process according to one of the claims 7 to 9, characterised in that components I, II and III have hydroxyl groups or isocyanate groups and the chain extender IV has isocyanate groups or hydroxyl groups.

11. Process according to one of the preceding claims, characterised in that the chain extender IV is used in a molar ratio of the reactive groups from I, II and III which are reactive towards IV to the reactive groups of IV of 1:1 to 10:1.

12. Process according to one of claims 7 to 11, characterised in that the reactive groups in I, II and III are alkoxysilane groups or isocyanate groups and water is used as the chain extender IV.

13. Aqueous coating composition containing an aqueous dispersion according to one of claims 1 to 6.

14. Coating composition according to claim 13, characterised in that it additionally contains other binders and/or crosslinking agents.

15. Use of the aqueous dispersions according to one of claims 1 to 6 and of the coating compositions according to claims 13 and 14 for the production of multilayer lacquer coatings.

16. Use according to claim 15 for the production of multilayer lacquer coatings in the automotive sector.

17. Use according to claim 16 for the production of surfacer layers and/or base lacquer layers and/or clear lacquer layers in multilayer lacquer coating.

18. Use according to claim 16 for the production of repair lacquer coatings, in particular for the production of final assembly repair lacquer coatings in the automotive sector.

## Revendications

1. Dispersion aqueuse de liants appropriée aux matériaux de revêtement, qu'on peut obtenir par réaction conjointe de
I. 20 à 97% en poids d'une ou de plusieurs résines polyuréthanne et/ou résines polyuréthanne-urée avec au moins un groupe réactif vis à vis d'un agent d'allongement des chaînes IV), ayant une masse molaire moyenne en nombre (Mn) de 1000 à 10000, et 8 à 80 mEqu pour 100 g de résine solide, de groupes ioniques, hydrophiles et/ou transformables en groupes ioniques,
II. 0 à 30% en poids d'une ou de plusieurs résines polyester ayant une masse molaire moyenne en nombre (Mn) de 500 à 5000 et deux ou plusieurs groupes réactifs de manière identique vis à vis de l'agent d'allongement des chaînes IV) comme en I), et
III. 3 à 80% en poids d'un ou de plusieurs copolymères (méth)acryliques avec 0 à 40 mEqu pour 100 g de résine solide, de groupes ioniques avec la même charge que dans le composant I) ou des groupes hydrophiles et/ou transformables en de tels groupes ioniques, ayant au moins deux groupes réactifs de manière identique vis à vis de l'agent d'allongement des chaînes IV) comme en I) et II)
dans lequel la somme des % en poids des composants I) à III) s'élève à 100% en poids
et dans lequel on a fabriqué au moins 50% en poids du composant III), par rapport à la quantité totale de composant III) en présence d'un ou de plusieurs des composants I) et/ou II), correspondant à au moins 20% en poids de la quantité totale de la somme des composants I) et II), avec
IV. un ou plusieurs agents d'allongement de chaînes IV), qui présentent deux ou plusieurs groupes réactifs, qui sont réactifs avec les groupes réactifs des composants I), II) et III),
de la neutralisation d'au moins une partie des groupes éventuellement présents transformables en groupe ionique, et du transfert dans la phase aqueuse.

2. Dispersion de liant selon la revendication 1, caractérisée en ce que les groupes réactifs des composants I, II et III sont des groupes hydroxyle, des groupes amino primaires, des groupes amino secondaires, des groupes hydrazine, des groupes alcoxysilane, des groupes aldéhyde, des fonctions 1,3-dicarbonyle, des groupes CH-acide ou des groupes isocyanate.

3. Dispersion de liant selon la revendication 2, caractérisée en ce que les groupes réactifs de l'agent d'allongement de chaîne IV sont choisis parmi les groupes exposés à la revendication 2 avec une capacité de réagir de manière complémentaire avec les groupes insérés dans les composants I, II et III.

4. Dispersion de liant selon une des revendications précédentes, caractérisée en ce que les composants I, II et III présentent des groupes hydroxyle ou des groupes isocyanate et l'agent d'allongement de chaîne IV des groupes isocyanate ou des groupes hydroxyle.

5. Dispersion de liant selon une des revendications précédentes, caractérisée en ce qu'on utilise l'agent d'allongement de chaîne IV dans un rapport molaire des groupes réactifs de I, II et III vis à vis de IV sur les groupes réactifs de IV de 1 : 1 à 10 : 1.

6. Dispersion de liant selon une des revendications 1 à 5, caractérisée en ce que les groupes réactifs dans I, II et III sont des groupes alcoxysilane ou isocyanate et en ce qu'on utilise l'eau comme agent d'allongement de chaîne IV.

7. Procédé de préparation de dispersion aqueuse de liant selon la revendication 1, appropriée comme matériau de revêtement, caractérisé en ce qu'on met à réagir
I. 20 à 97% en poids d'une ou de plusieurs résines polyuréthanne et/ou résines polyuréthanne-urée avec au moins un groupe réactif vis à vis d'un agent d'allongement des chaînes IV), ayant une masse molaire moyenne en nombre (Mn) de 1000 à 10000, et 8 à 80 mEqu pour 100 g de résine solide, de groupes ioniques, hydrophiles et/ou transformables en groupes ioniques,
II. 0 à 30% en poids d'une ou de plusieurs résines polyester ayant une masse molaire moyenne en nombre (Mn) de 500 à 5000 et deux ou plusieurs groupes réactifs de manière identique vis à vis de l'agent d'allongement des chaînes IV) comme en I), et
III. 3 à 80% en poids d'un ou de plusieurs copolymères (méth)acryliques avec 0 à 40 mEqu pour 100 g de résine solide, de groupes ioniques avec la même charge que dans le composant I) ou des groupes hydrophiles et/ou transformables en de tels groupes ioniques, ayant au moins deux groupes réactifs de manière identique vis à vis de l'agent d'allongement des chaînes IV) comme en I) et II)
dans lequel la somme des % en poids des composants I) à III) s'élève à 100% en poids
et dans lequel on a fabriqué au moins 50% en poids du composant III), par rapport à la quantité totale de composant III) en présence d'un ou de plusieurs des composants I) et/ou II), correspondant à au moins 20% en poids de la quantité totale de la somme des composants I) et II), avec
IV. un ou plusieurs agents d'allongement de chaînes IV), qui présentent deux ou plusieurs groupes réactifs, qui sont réactifs avec les groupes réactifs des composants I), II) et III),
on neutralise au moins une partie des groupes éventuellement présents transformables en groupe ionique et on transfère dans la phase aqueuse.

8. Procédé selon la revendication 7, caractérisé en ce que les groupes réactifs des composants I, II et III sont des groupes hydroxyle, des groupes amino primaires, des groupes amino secondaires, des groupes hydrazine, des groupes alcoxysilane, des groupes aldéhyde, des fonctions 1,3-dicarbonyle, des groupes CH-acide ou des groupes isocyanate.

9. Procédé selon la revendication 8, caractérisé en ce que les groupes réactifs de l'agent d'allongement de chaîne IV sont choisis parmi les groupes exposés à la revendication 8 avec une capacité de réagir de manière complémentaire avec les groupes insérés dans les composants I, II et III.

10. Procédé selon une des revendications 7 à 9, caractérisé en ce que les composants I, Il et III présentent des groupes hydroxyle ou des groupes isocyanate et l'agent d'allongement de chaîne IV des groupes isocyanate ou des groupes hydroxyle.

11. Procédé selon une des revendications précédentes, caractérisé en ce qu'on utilise l'agent d'allongement de chaîne IV dans un rapport molaire des groupes réactifs de I, II et III vis à vis de IV sur les groupes réactifs de IV de 1 : 1 à 10 : 1.

12. Procédé selon une des revendications 7 à 11, caractérisé en ce que les groupes réactifs dans I, II et III sont des groupes alcoxysilane ou isocyanate et en ce qu'on utilise l'eau comme agent d'allongement de chaîne IV.

13. Matériau de revêtement aqueux, contenant une dispersion aqueuse selon une des revendications 1 à 6.

14. Matériau de revêtement selon la revendication 13, caractérisé en ce qu'il contient en plus d'autres liants et/ou agents de réticulation.

15. Utilisation des dispersions aqueuses selon une des revendications 1 à 6, ainsi que du matériau de revêtement selon les revendications 13 et 14 pour la préparation de peintures multicouches.

16. Utilisation selon la revendication 15 pour la préparation de peintures multicouches dans le secteur des véhicules à moteur.

17. Utilisation selon la revendication 16 pour la préparation de couches de filler et/ou de couches de laque de base et/ou de couches de vernis incolore pour la peinture multicouche.

18. Utilisation selon la revendication 16 pour la préparation de dépôts de peinture de réparation, en particulier pour la préparation de dépôts de peinture de réparation de fin de montage dans le secteur des véhicules à moteur.
